Europäisches Patentamt

European Patent Office

Office européen des brevets

(19)

(11) Publication number: **0 155 913**
**B1**

(12) # EUROPEAN PATENT SPECIFICATION

(45) Date of publication of patent specification: **20.07.88**

(51) Int. Cl.⁴: **B 60 H 1/00**

(21) Application number: **85830015.5**

(22) Date of filing: **25.01.85**

(54) **Device for controlling the air conditioning of the passenger compartment of a motor vehicle, the device having a variable-hue light-emitting visual indicator.**

(30) Priority: **26.01.84 IT 5290684 u**

(43) Date of publication of application:
**25.09.85 Bulletin 85/39**

(45) Publication of the grant of the patent:
**20.07.88 Bulletin 88/29**

(84) Designated Contracting States:
**DE FR GB**

(56) References cited:
**US-A-4 174 749**
**US-A-4 191 242**
**US-A-4 234 936**

**PATENTS ABSTRACTS OF JAPAN, vol. 7, no.
98(M-210)(1243), 26th April 1983, page 24 M
210; & JP - A - 58 20 509 (DIESEL KIKI K.K.)
07-02-1983
IDEM.**

(73) Proprietor: **FIAT AUTO S.p.A.**
**Corso Giovanni Agnelli 200**
**I-10135 Torino (IT)**

(72) Inventor: **Cornacchia, Felice**
**Corso Giovanni Agnelli, 24**
**I-10137 Torino (IT)**

(74) Representative: **Quinterno, Giuseppe et al**
**c/o Jacobacci-Casetta & Perani S.p.A. Via Alfieri,
17**
**I-10121 Torino (IT)**

Courier Press, Leamington Spa, England.

## Description

The present invention relates to a device for controlling the air conditioning of the passenger compartment of a motor vehicle by the controlled emission of air through at least one ventilation aperture, the said device including:

—manually-operable adjustment means arranged to vary the temperature of air emitted into the passenger compartment through the said at least one aperture between a minimum value and a maximum value,

—at least one light-emitting indicator device associated with the said at least one aperture and intended to be located within the passenger compartment, and including at least one first and one second light source of different colours; and

—control means arranged to provide the said at least one indicator device with control signals varying in dependence on the temperature of the air passed into the passenger compartment to activate the first source and/or the second source thus causing the emission of light with a hue variable in dependence on the temperature of the air passed into the passenger compartment.

US—A—4,191,242 discloses a device of the above-defined kind, with light-emitting indicators each comprising at least one red lamp and one blue lamp. In this known device a control circuit can, for each indicator, selectively activate the red lamp(s) or the blue lamp(s) or both, to cause the emission of red or blue or purple light, depending on the temperature of the air passed into the passenger compartment. Thus in this known system the said indicators can only emit light having three colours; no possibility is given to change in a substantially continuous way the colour of the light emitted.

A device which allows to change in a continuous way the colour of an indicator is disclosed in Japanese Abstract No. 5820509. The device disclosed in this document includes two diodes emitting light of different colours, which are subjected to analog voltages the amplitudes of which vary as a function of the temperature sensed. In this known device all changes in the circuit parameters and in the supply voltages can appreciably affect the colour of the optical indication.

The object of the present invention is to provide an improved device of the previously specified kind, in which the said at least one indicator device is capable of emitting light with a colour varying continuously as a function of the temperature sensed, and which is driven in a safer and more reliable way.

In order to achieve this object, according to the present invention, there is proposed a control device of the aforesaid type, characterized in that the said control means include circuit means arranged to supply said first and second light sources with first and second square-wave control signals respectively, having a pulse-duration which varies in a substantially continuous manner between a minimum and a maximum value as a function of the temperature of the air passed into the passenger compartment.

Further characteristics and advantages of the control device according to the invention will become apparent from the detailed description which follows, made with reference to the appended drawings, provided purely by way of non-limiting example, in which:

Figure 1 is a schematic view of a ventilation system for air conditioning a passenger compartment of a motor vehicle.

Figure 2 is a block circuit diagram of a control device according to the invention,

Figure 3 is a perspective view of a control panel forming part of the device according to the invention,

Figure 4 is a circuit diagram of part of the device shown in Figure 2, and

Figure 5 shows the waveforms of several signals generated in operation of the device according to the invention.

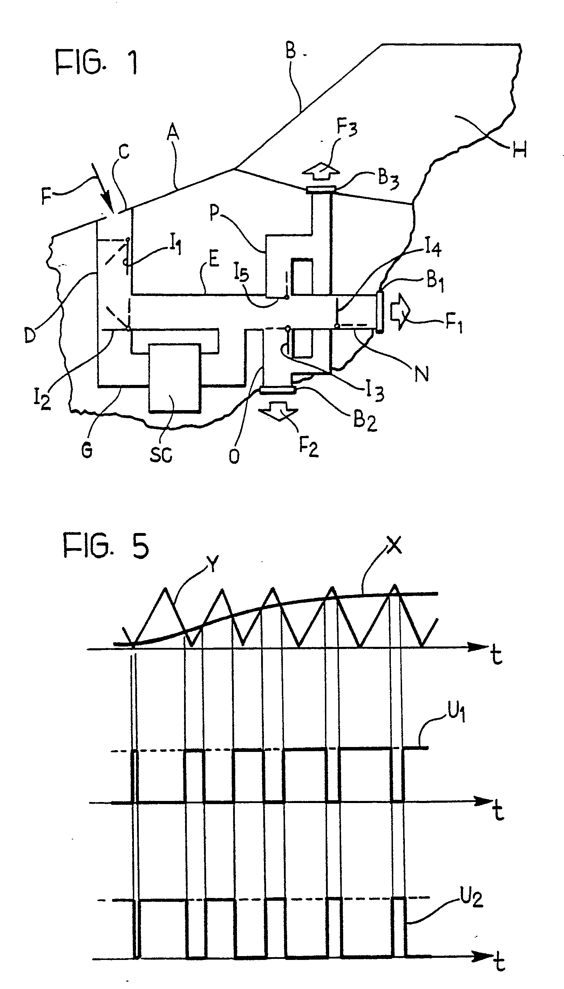

Figure 1 schematically shows a forwardly-facing front portion A of the bodywork of a motor vehicle with its windscreen B. The bodywork A is provided with at least one aperture C through which a flow of air is supplied, as shown by the arrow F, to a manifold D one end of which is connected to the aperture. In the embodiment illustrated, the manifold derives into two branches E, G; the first is divided in its turn into three arms N, O, P which open at different heights into the passenger compartment H through apertures indicated B1, B2, B3; the arm G passes through a heat exchanger SC and then rejoins the arm E upstream of the fork O—N. The exchanger SC allows heat to be transferred from the engine coolant to air circulating in the arm G.

In a manner known per se, a motorised shut-off valve member I1 is positioned in, and is arranged to vary the air flow through, the manifold D between O and a maximum value. A motorised flow divider member I2 is located in the fork of the manifold in known manner and is arranged to take up a plurality of positions to divide the air flow fed from the manifold D to the arms G and E in variable proportions.

Respective movable shut-off valve members I3, I4, and I5 which are also motorised, are located in the arms O, N, P and serve to prevent or enable the passage of air towards the apertures B1, B2, and B3. In the diagram given by way of example in Figure 1, the third aperture B3 communicates with the arm O downstream of the shut-off valve I3.

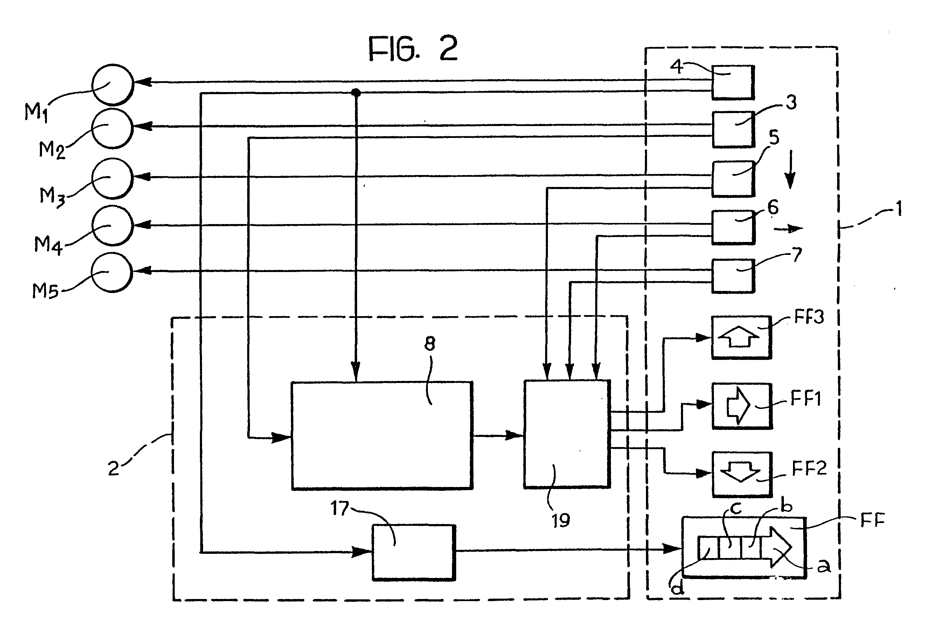

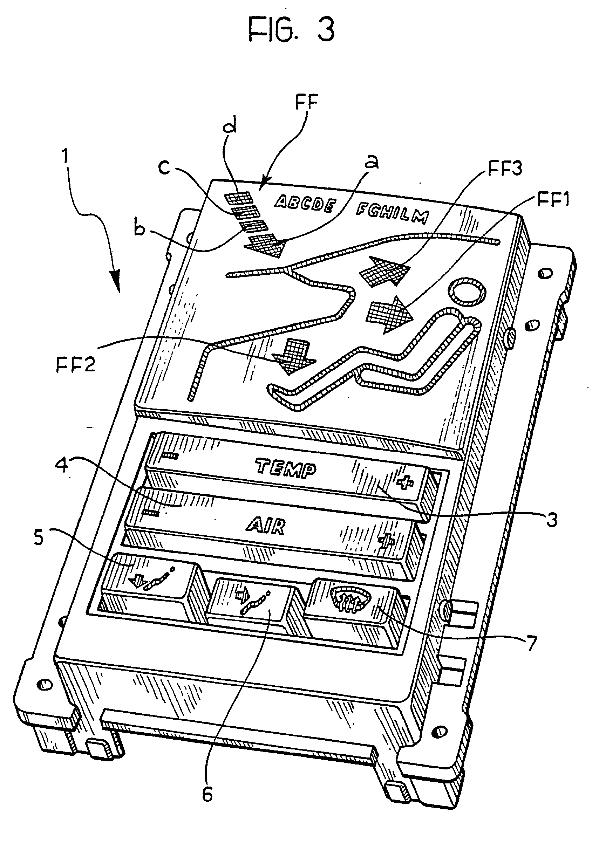

A control device embodying the invention is shown schematically in Figure 2. This device includes a control panel 1 connected to circuitry generally indicated 2 and to a series of electric motors M1 to M5 associated, in order, with the shut-off valve members I1 to I5 described above. A preferred form of the panel 1, which is intended for mounting in the passenger compartment of the motor vehicle in a readily accessible position, is shown in Figure 3. This panel incorporates two rocker-type keys 3, 4 which can take up a plurality of positions intermediate two end positions, and three push buttons 5, 6, 7. The keys 4, 3, when operated, cause operation of the motors M1 and M2 respectively and consequent movement of the shut-off valve members I1 and I2. In this manner, the air flow rate through the manifold D and the proportion of this air flow intended to be heated by passage through the heat exchanger SC can be varied. More particularly, it is possible to regulate the temperature of the air passed into the passenger compartment H between a minimum value and a maximum value by means of the rocker key 3.

The control panel 1 also has visual display lights FF1, FF2 and FF3, preferably shaped in the form of arrows, which are respectively associated with the apertures B1 to B3. A further visual display light FF, also arrow-shaped, is constituted, in the example illustrated, by four indicator lights a—d arranged next to each other as seen in particular in Figure 3. This indicator is associated with the aperture, or series of apertures, C for admitting air into the manifold D.

Respective position sensors (not illustrated) are associated with the rocker keys 3, 4 and are constituted for example by resistance potentiometers incorporated therein.

In use, in order to vary the air flow taken from the exterior and passed into the passenger compartment it is necessary to operate the rocker key 4 to cause a corresponding movement of the shut-off valve member I1 by means of the motor M1. The operation of the rocker key 4 as sensed by the associated position sensor, causes by means of a control circuit 17 (Figure 2) of known type, one or more indicator segments FF to light up according to the throughput of air through the manifold D. In particular, when the throughput of air in the manifold is a maximum all the segments a—d of the indicator FF are lit. In a practical embodiment, the segments a—d of the indicator FF are constituted by at least partially transparent areas of the front face of the panel 1 behind each of which is arranged a respective light emitting diode or equivalent light source.

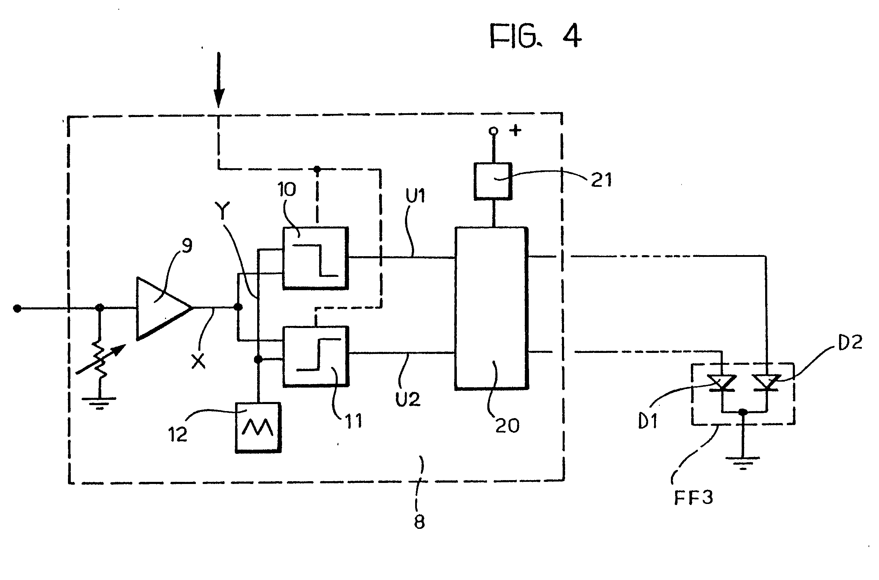

In order to regulate the temperature of the air passed into the passenger compartment it is only necessary to operate the rocker key 3; by means of the motor M2 it is possible to vary the position of the divider member I2 and hence the throughput of air which, by passage through the heat exchanger SC, is heated before emission into the passenger compartment. As stated above, a position sensor is associated with the key 3 and is arranged to output a voltage signal indicative of the position of the key 3 this voltage having an amplitude which increases as the throughput of air through the arm G increases. This signal is fed to the input of a processing and comparator circuit generally indicated 8 in Figure 2 and shown in greater detail in Figure 4. This circuit controls the activation of the light-emitting indicators FF1 to FF3 by means of a selector circuit 19 in the manner which will be described below. The circuit 19 receives control signals from the push buttons 5, 6 and 7: when the push button 6 is pressed to allow air to be passed into the passenger compartment through the aperture B1, the circuit 19 enables the indicator FF1 to be lit. When the push button 5 is operated to allow air to be passed into the passenger compartment through the apertures B2 and B3, the circuit 19 enables the indicators FF2 and FF3 to be lit.

In particular, according to the invention, associated with each of the indicators FF1 to FF3 is at least a first and a second light source, for example light emitting diodes of different colours, for example green and red. Moreover, the processing and comparator circuit 8 is arranged, in a manner which will be described below, to output control signals for causing light to be emitted by the first source of each of these indicators with decreasing intensity, and by the second source with increasing intensity, as the throughput of air through the arm G, and hence through the heat exchanger SC, increases. On the other hand, upon a decrease in the throughput of air passing through the heat exchanger, the intensity of the light emitted by the first source of each indicator is increased while the intensity of the light emitted by the second source is decreased.

Thus, for example, if the throughput of air through the exchanger SC is a minimum and the shut-off valve member I3, I4 and I5 are in their respective positions illustrated in full outline in Figure 1, the indicators FF2 and FF3 emit light of the said first colour, for example green. Now supposing the throughput of air through the arm G is increased by operation of the rocker key 3, on variation of the throughput of air through the heat exchanger the light emitted by the indicators FF2 and FF3 changes progressively from the first to the second colour, for example from green to red, and takes on this latter colour when the throughput of air in the arm G reaches its maximum value.

In order to achieve the variation in hue described above, the processing and comparator circuit 8 as is seen in Figure 4, includes an input amplifier 9 arranged to receive the signal output by the position sensor associated with the rocker key 3 and to output a signal X, a portion of which is shown in Figure 5 by way of example. The signal X is compared in two threshold comparators 10, 11, respectively an inverting one and a non-inverting one, with a triangular waveform signal Y generated by an oscillator 12. These comparator circuits output signals U1 and U2 (Figure 5) having respective duty cycles and hence mean values which vary in dependence on the amplitude of the signal X. In particular, the mean value of the signal U1 increases as the amplitude X increases while the mean value of U2 decreases. The signals U1 and U2 are used to control (through the switching circuit 19 the two sources associated with each of the light-emitting indicators FF1 to FF3. Figure 4 shows by way of example, only one of these indicators (FF3) comprising a pair of light emitting diodes D1, D2.

Each indicator FF1—FF3 can, of course, have more than two associated light sources each, and the circuit 8 would in this case include a corresponding number of comparator circuits.

The processing and comparator circuit 8, may also include a colour matrix circuit of known type, indicator 20 in Figure 4, for connection between the comparator circuit 10 and the light sources of each indicator Moreover in known manner, a device 21 (for example a variable resistor) may be provided for regulating the light intensity of the sources used.

Although reference has been made by way of example in the previous description to an embodiment including three ventilation apertures B1—B3, clearly the number of ventilation apertures used does not form part of the invention. Furthermore, embodiments in which each aperture is replaced by a series of apertures also fall within the scope of the present invention.

**Claims**

1. A device for controlling the air conditioning of the passenger compartment (H) of a motor vehicle by the controlled emission of air through at least one ventilation aperture (B1, B2, B3), the said device including:
—manually-operable adjustment means (3; M2, I2) arranged to vary the temperature of air emitted into the passenger compartment through the at least one aperture (B1, B2 B3) between a minimum and a maximum value,
—at least one light-emitting indicator device (FF1; FF2; FF3) associated with the said at least one aperture (B1; B2; B3) and intended to be located within the passenger compartment (H), and including at least one first and one second light source (D1, D2) of different colours; and
—control means (4; 5, 6; 8, 19) arranged to provide the at least one indicator device (FF1; FF2; FF3) with control signals (U1, U2) varying in dependence on the temperature of the air passed into the passenger compartment (H) to activate the first source (D1) and/or the said second source (D2) thus causing the emission of light with a hue variable in dependence on the temperature of the air passed into the passenger compartment (H);
characterised in that the said control means include circuit means (8) arranged to supply said first and second light sources (D1, D2) with first and second square-wave control signals (U1, U2) respectively, having a pulse-duration which varies in a substantially continuous manner between a minimum and a maximum value as a function of the temperature of the air passed into the passenger compartment (H).

2. A control device according to Claim 1, in which external air can be passed into the passenger compartment (H) through a first, direct, path (D, E, O; P, N) and/or a second path (D, G, O; P, N) along which air heating means (SC) are disposed, and in which the adjustment means include a motorised flow divider device (I2, M2) arranged to vary the division between the first and/or second path of air supplied to the at least one aperture (B1, B2, B3), characterised in that the control means include sensor means arranged to generate an electrical signal (X) indicative of the position of the divider device (I2), and the said circuit means include:
—a signal generator (12) for generating a triangular waveform (Y) of constant period,
—first and second threshold comparator circuits (10, 11), respectively of the inverting and non-inverting type, arranged to compare the signal (X) output by the detector means with the said triangular waveform (Y) and to output respective square wave signals (U1; U2) with duty cycles which vary in dependence on the amplitude of the signal (X) output by the sensor means; the square wave signals (U1, U2) being used to control the said at least one first and at least one second light sources (D1, D2).

3. A control device according to Claim 1 or Claim 2, characterised in that the light sources are coloured lamps.

4. A control device according to Claim 1 or Claim 2, characterised in that the light sources are light-emitting diodes (D1, D2).

5. A control device according to any one of the preceding claims, including a plurality of ventilation apertures, or series of ventilation apertures, (B1; B2; B3) for supplying respective air flows in respective directions or to respective regions of the passenger compartment (H), and manually-operable selector means (5, 6) for allowing the selective activation of each aperture or series of apertures, characterised in that each aperture or series of apertures (B1; B2; B3) has an associated light-emitting indication device (FF1; FF2; FF3) of the aforesaid type, and in that switch means (19) are provided which are controlled by the selector means (5, 6) and are arranged to allow the selective activation of the indicator device (FF1; FF2; FF3) corresponding to the aperture or series of apertures (B1; B2; B3) activated.

6. A control device according to any one of the preceding claims, characterised in that the light-emitting indicator device (FF1; FF2; FF3) associated with each aperture or series of apertures (B1; B2; B3) includes a substantially arrow-shaped visual display.

7. A control device according to any one of the preceding claims, in which air outside the motor vehicle is taken through one or more apertures (C) in the bodywork and a manifold (D) connected to the or each aperture, and in which the control means include a motorised shut-off valve member (I1) disposed in the manifold (D), and manually-operable control means (4; M1) arranged to vary the external air flow intake by means of the shut-off valve member (I1), characterised in that it further includes a further light-emitting indicator device (FF) intended to be disposed within the passenger compartment (H) and including a plurality of light sources (a—d) arranged to be lit in succession as the external air flow intake increases.

8. A control device according to Claim 7, characterised in that the further light-emitting indicator device (FF) is substantially arrow-shaped.

**Patentansprüche**

1. Vorrichtung zur Steuerung einer Klimaanlage für den Fahrgastraum (H) eines Kraftfahrzeugs durch gesteuerte Abgabe von Luft durch wenigstens eine Ventilationsöffnung (B1, B2, B3) mit manuell betätigbaren Einstellmitteln (3; M2, I2) zur Änderung der Temperatur der durch die wenigstens eine Ventilationsöffnung (B1, B2, B3) in den Fahrgastraum (H) abgegebenen Luft zwischen einem Minimal- und einem Maximalwert,

mit wenigstens einer der wenigstens einen Ventilationsöffnung (B1; B2; B3) zugeordneten und in dem Fahrgastraum (H) anbringbaren lichtemittierenden Anzeigeeinrichtung (FF1; FF2; FF3), die wenigstens eine erste und eine zweite Lichtquelle (D1, D2) unterschiedlicher mit Färbung aufweist,

sowie mit Steuermitteln (4; 5, 6; 8, 19), die so angeordnet sind, daß sie an die wenigstens eine Anzeigeeinrichtung (FF1; FF2; FF3) Steuersignale (U1, U2) liefern kann, die sich in Abhängigkeit von der Temperatur der in den Fahrgastraum (H) eintretenden Luft ändern und die erste Lichtquelle (D1) und/oder die zweite Lichtquelle (D2) aktivieren und dadurch die Aussendung von Licht bewirken, dessen Farbton sich in Abhängigkeit von der Temperatur der in den Fahrgastraum (H) gelangenden Luft ändert, dadurch gekennzeichnet,

daß die Steuermittel (8) Schaltungsmittel enthalten, die so ausgebildet sind, daß sie der ersten und der zweiten Lichtquelle (D1, D2) erste bzw. zweite rechteckförmige Steuersignale (U1, U2) zuführen, deren Impulsdauer sich im wesentlichen in Abhängigkeit von der Temperatur der in den Fahrgastraum (H) gelangenden Luft zwischen einem Minimal- und einem Maximalwert ändert.

2. Steuervorrichtung nach Anspruch 1, bei der über einen ersten direkten Weg (D, E, O; P, N) und/oder einen zweiten Weg (D, G, O; P, N) in dem Heizungsmittel (SC) angeordnet sind, Außenluft in den Fahrgastraum (H) gelangen kann,

und bei der die Einstellmittel einen motorisierten Flußteiler (I2, M2) umfassen, der so angeordnet ist, daß die Aufteilung zwischen dem ersten und/oder dem zweiten Weg für die der wenigstens einen Ventilationsöffnung (B1, B2, B3) variiert, dadurch gekennzeichnet,

daß die Steuermittel Sensormittel zur Erzeugung eines die Position der Teilervorrichtung (I2) kennzeichnenden elektrischen Signals (X) aufweisen,

und daß die genannten Schaltungsmittel folgende Teile umfassen:

—einen Signalgenerator (12) zur Erzeugung eines dreieckförmigen Signals (Y) konstanter Periode,

—eine erste und eine zweite Schwellwert-Komparatorschaltung (10, 11) vom invertierenden bzw. nichtinvertierenden Typ, die so angeordnet sind, daß sie das Ausgangssignal (X) der Sensormittel mit dem dreieckförmigen Signal (Y) vergleichen und entsprechende rechteckförmige Signale (U1; U2) abgeben, deren Impuls/Pausen-Verhältnis sich in Abhängigkeit von der Amplitude des von den Sensormitteln abgegebenen Signals (X) ändern, wobei die rechteckförmigen Signale (U1, U2) zur Steuerung der wenigstens einem ersten und der wenigstens einen zweiten Lichtquelle (D1, D2) dienen.

3. Steuervorrichtung nach Anspruch 1 oder 2, dadurch gekennzeichnet, daß die Lichtquellen farbige Lampen sind.

4. Steuervorrichtung nach Anspruch 1 oder 2, dadurch gekennzeichnet, daß die Lichtquellen lichtemittierenden Dioden (D1, D2) sind.

5. Steuervorrichtung nach einem der vorhergehenden Ansprüche

mit mehreren Ventilationsöffnungen oder Reihen von Ventilationsöffnungen (B1; B2; B3) zur Zufuhr entsprechender Luftströme in spezielle Richtungen oder in spezielle Bereiche des Fahrgastraums (H)

sowie mit manuell betätigbaren Wählmitteln (5, 6) zur selektiven Aktivierung der einzelnen Ventilationsöffnungen oder Reihen von Ventilationsöffnungen, dadurch gekennzeichnet,

daß jeder der Ventilationsöffnungen oder jeder Reihe von Ventilationsöffnungen (B1; B2; B3) eine lichtemittierende Anzeigeeinrichtung (FF1; FF2; FF3) der vorgenannten Art zugordnet ist,

und daß von den Wählmitteln (5, 6) gesteuerte Schaltermittel (19) vorgesehen sind, die so angeordnet sind, daß sie die selektive Aktivierung der Anzeigeeinrichtung (FF1; FF2; FF3) entsprechend den jeweils aktivierten Ventilationsöffnungen oder Reihen von Ventilationsöffnungen (B1; B2; B3) ermöglichen.

6. Steuervorrichtung nach einem der vorhergehenden Ansprüche, dadurch gekennzeichnet, daß die den einzelnen Ventilationsöffnungen oder Reihen von Ventilationsöffnungen (B1; B2; B3) zugeordnete lichtemittierenden Anzeigeeinrichtung (FF1; FF2; FF3) jeweils ein im wesentlichen pfeilförmiges visuelles Display unfaßt.

7. Steuervorrichtung nach einem der vorhergehenden Ansprüche,

bei der Luft von außerhalb des Kraftfahrzeugs durch eine oder mehrere in der Fahrzeugkarosserie angebrachte Öffnungen (C) und eine mit der oder jeder dieser Öffnungen verbundene Verteilerleitung (D) eingeführt wird

und bei der die Steuermittel ein in dieser Verteilerleitung (D) angeordnetes motorisiertes Absperrventilorgan (I1) sowie manuell betätigbare Steuermittel (4; M1) enthalten, wobei letztere (4; M1) so angeordnet sind, daß sie den Einlaß für den Außenluftstrom mit Hilfe des Absperrventilorgans (I1) variieren, dadurch gekennzeichnet,

daß in dem Fahrgastraum (H) eine weitere lichtemittierende Anzeigeeinrichtung (FF) vorgesehen ist, die mehrere Lichtquellen (a—d) umfaßt, die aufeinanderfolgende aufleuchten, wenn der Außenluftstromeinlaß größer wird.

8. Steuervorrichtung nach Anspruch 7, dadurch gekennzeichnet, daß die weitere lichtemittierende Anzeigeeinrichtung (FF) im wesentlichen pfeilförmig ausgebildet ist.

## Revendications

1. Dispositif pour commander le conditionnement d'air de l'habitacle (H) d'un véhicule motorisé par envoi commandé d'air à travers au moins une ouverture de ventilation (B1, B2, B3), ledit dispositif comportant:

—des moyens de réglage (3; M2, I2) manoeuvrables manuellement et disposés pour faire varier, entre une valeur minimale et une valeur maximale, la température de l'air envoyée dans l'habitacle à travers les ouvertures (B1, B2, B3), au moins au nombre de une,

—au moins un dispositif indicateur lumineux (FF1; FF2; FF3) associé avec lesdite ouvertures (B1, B2, B3), au moins au nombre de une, et prévu être placé à l'intérieur de l'habitacle (H), et comprenant au moins une première et une seconde sources lumineuses (D1, D2) de différentes couleurs; et

—des moyens de commande (4; 5; 6; 8; 19) prévus pour envoyer aux dispositifs indicateurs (FF1; FF2; FF3), au moins au nombre de un, des signaux de commande (U1, U2) qui varient en fonction de la température de l'air envoyé dans l'habitacle (H) pour activer la première source (D1) et/ou ladite seconde source (D2), provoquant ainsi l'émission de lumière de couleur variable en fonction de la température de l'air envoyé dans l'habitacle (H);

caractérisé en ce que lesdits moyens de commande comportent un circuit (8) prévu pour envoyer à ladite première et à ladite seconde source lumineuses (D1, D2) un premier et un second signaux de commande à onde carrée (U1, U2), respectivement, dont la durée d'impulsion varie, de façon sensiblement continue, entre une valeur minimale et une valeur maximale, en fonction de la température de l'air envoyé dans l'habitacle (H).

2. Dispositif de commande selon la revendication 1, dans lequel on peut envoyer de l'air extérieur dans l'habitacle (H) en passant par un premier chemin direct (D, E, O; P, N) et/ou un second chemin (D, G, O; P, N) le long duquel sont disposés des moyens de chauffage (SC) et dans lequel les moyens de réglage comprennent un dispositif motorisé (I2, M2) de division du flux disposé pour faire varier la division entre le premier chemin et/ou le second chemin de l'air envoyé dans les ouvertures (B1, B2, B3), au moins au nombre de une, caractérisé en ce que les moyens de commande comportent un moyen formant détecteur disposé pour générer un signal électrique (X) indicatif de la position du dispositif de division (I2); et en ce que ledit circuit comporte:

—un générateur de signal (12) pour générer une onde triangulaire (Y) de période constante,

—un premier et un second circuits comparateurs (10, 11) à valeur de seuil, respectivement du type inverseur et non-inverseur, disposés pour comparer le signal (X) émis par le moyen formant détecteur avec ladite onde triangulaire (Y) et pour émettre des signaux à onde carrée respectifs (U1; U2) dont les rapports présence-absence d'impulsion varient en fonction de l'amplitude du signal (X) émit par le moyen formant détecteur; les signaux à onde carrée (U1, U2) servant à commander ladite première et ladite seconde sources lumineuses (D1, D2), respectivement, au moins au nombre de une.

3. Dispositif de commande selon la revendication 1 ou la revendication 2, caractérisé en ce que les sources lumineuses sont des ampoules colorées.

4. Dispositif de commande selon la revendication 1 ou la revendication 2, caractérisé en ce que les sources lumineuses sont des diodes électroluminescentes (D1, D2).

5. Dispositif de commande selon l'une quelconque des revendications précédentes, comportant une pluralité d'ouvertures de ventilation ou des séries d'ouvertures de ventilation (B1; B2; B3) pour envoyer des flux d'air respectifs dans des directions respectives ou dans des régions respectives de l'habitacle (H), ainsi que des moyens de sélection (5, 6) manoeuvrables manuellement, pour permettre d'activer sélectivement chaque ouverture ou chaque série d'ouvertures, caractérisé en ce que chaque ouverture ou chaque série d'ouvertures (B1; B2; B3) présente un dispositif indicateur lumineux associé (FF1; FF2; FF3) du type indiqué ci-dessus; et en ce qu'il est prévu des moyens de commutation (19) qui sont commandés par les moyens de sélection (5, 6) et sont disposés pour permettre d'activer sélectivement le dispositif indicateur (FF1; FF2; FF3) correspondant à l'ouverture ou à la série d'ouvertures (B1; B2; B3) activées.

6. Dispositif de commande selon l'une quelconque des revendications précédentes, caractérisé en ce que le dispositif indicateur lumineux (FF1; FF2; FF3) associé à chaque ouverture ou à chaque série d'ouvertures (B1; B2; B3) comporte un témoin optique sensiblement en forme de flèche.

7. Dispositif de commande selon l'une quelconque des revendications précédentes, dans lequel on prend de l'air à l'extérieur du véhicule motorisé par l'intermédiaire d'une ou plusieurs ouvertures (C) prévues dans la carrosserie et d'un distributeur (D) relié à l'ouverture ou à chaque ouverture, et dans lequel les moyens de commande comportent une vanne de fermeture motorisée (I1) disposée dans le distributeur (D), et des moyens de commande (4; M1), manoeuvrables manuellement, disposés pour faire varier l'admission d'air extérieur au moyen de la vanne de fermeture (I1), caractérisé en ce qu'il comporte en outre un dispositif indicateur lumineux supplémentaire (FF) prévu être disposé à l'intérieur de l'habitacle (H) et comprenant une pluralité de sources lumineuses (a—d) disposées pour s'allumer successivement au fur et à mesure que l'admission d'air extérieur augmente.

8. Dispositif de commande selon la revendication 7, caractérisé en ce que le dispositif indicateur lumineux supplémentaire (FF) a sensiblement la forme d'une flèche.

0 155 913

FIG. 1

FIG. 5

FIG. 2

# FIG. 3

FIG. 4